# EUROPEAN PATENT APPLICATION

(11) **EP 0 726 673 A2**
(43) Date of publication of application: **14.08.1996**
(21) Application number: 96300774.5
(22) Date of filing: 05.02.1996
(51) Int. Cl.: H04N 5/232

(54) **Video telemetry**

(30) Priority: 10.02.1995 GB 9502633
(71) Applicant: BAXALL SECURITY LIMITED, Stockport, Cheshire, SK6 2SU (GB)
(72) Inventor: Beare, Peter Derek, Cheshire M33 2AW (GB); Partington, Michael, Cheshire M33 5NJ (GB)
(74) Representative: McNeight, David Leslie

(57) **Abstract**

There is disclosed a bi-directional telemetry system in which telemetry data is transmitted within a video picture transmission sequence through a single transmission medium.

## Description

This invention relates to the field of video telemetry.

Closed circuit television (CCTV) has important applications in the fields of security, surveillance and monitoring. CCTV cameras are often mounted in outdoor or indoor housings which are themselves mounted on a motorised head to enable wide area coverage. Control of the iris, focus and zoom settings on the camera lens as well as control of a number of auxiliary functions such as pan and tilts, lighting and wash-wipe of the housing window is common place.

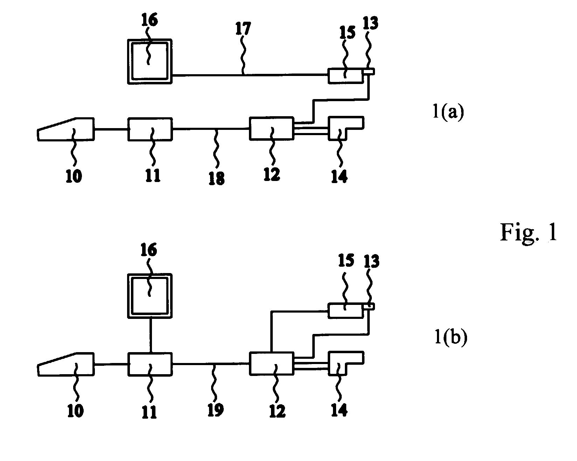

The control of these functions is achieved by sending 'telemetry' data to control electronics situated in the vicinity of or within the camera. Figure 1 depicts typical prior art connections. An operator may perform the above mentioned operations by pressing keys on a control keyboard 10, the key presses being interpreted and transmitted by a telemetry transmitter 11 which encodes the data into the allocated video time slot. A telemetry receiver 12 listens for transmitted data within the correct time slot, decodes the information and relays the appropriate command signals to, for instance, the camera lens 13 or the motorised head 14. Video signal is generated by the camera 15, and the video is ultimately displayed on an appropriate video monitor 16 for observation and positive feedback.

Figure 1a shows one prior art arrangement in which separate cables 17, 18 are employed for the video and telemetry data respectively. An improved prior art method, pioneered by the present assignees, is shown in Figure 1b and involves the transmission of telemetry data and video across a single coaxial cable 19, an approach that results in a significant reduction in wiring and installation costs.

The principle behind the assignees' existing single coaxial telemetry is to send unidirectional data from the transmitter to the receiver, data being inserted after the frame and line equalisation pulses. There are two forms of single coaxial telemetry currently available; one that places the telemetry data signal within the time slot but overlapping the line synchronisation pulse ("standard telemetry") and one that waits for line synchronisation to finish ("clean telemetry").

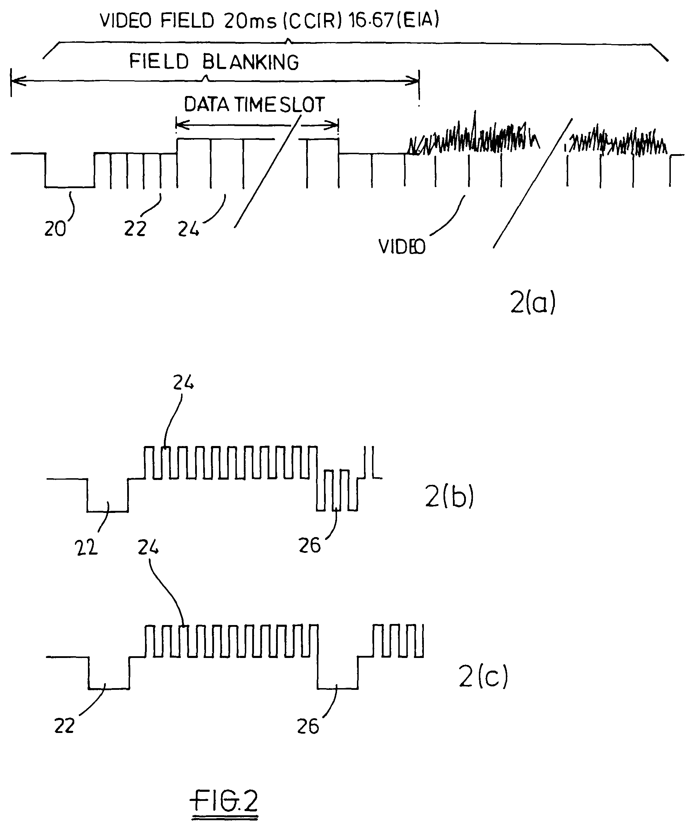

Figure 2 illustrates these two forms of telemetry, which both involve data transmission in the field blanking slot, specifically after transmission of the frame synchronisation pulse 20 and five equalisation pulses 22 (Figure 2(a)). Data 24 are then modulated on to the video signal and consist of the following:-

### Standard Telemetry

10-11 lines of data
1 start bit
8 data bits
1 parity bit
1 stop bit
250 KHz = 1
220 KHz = 0
Bit period = 50 µs

The data 24 can take between 520µs and 570µs to transmit, with spillage into line sync. pulses 26 ensuing (see Figure 2(b)).

### Clean Telemetry

11 lines of data, one data bit per line

The data make up is as with the standard telemetry, but it is transmitted over 11 lines and as is shown in Figure 2(c), does not interfere with the line syncs 26.

Overall the effective data transfer rate is equivalent to 550 bits/second in both cases.

However, there is an increasing need for more data to be transmitted, and, additionally, a need has arisen for data transmission to be bi-directional.

The present invention addresses the aforementioned needs.

According to the invention there is provided a bi-directional telemetry system in which telemetry data is transmitted within a video picture transmission sequence through a single transmission medium.

The single transmission medium may be coaxial, twisted pair, fibre optic or ordinary cable, or a microlink or radi link.

The telemetry data may be sent during the field blanking time, and the transmission of telemetry data may commence after the frame synchronisation pulse and a pre-defined number of line equalisation pulses. The number of line equalisation pulses before telemetry data transmission may be five.

Each data bit may be a 3 unit wide, pulse width modulated signal, and the data bit period may be 3µs.

Data may be transmitted as lines of data bits, each line being transmitted between consecutive line equalisation or synchronisation pulses. There may be sixteen data bits per line.

The system may involve sending ten lines of telemetry data at a time, of which the first five lines of data may be sent to the camera end and the second five lines of data may be sent from the camera end.

Alternatively, data may be sent in one direction during an odd field and in the other direction during the even field.

The telemetry system may comprise a control end, a camera end and a single transmission medium linking said ends, in which said control end comprises:-
control keyboard means;
control telemetry transmitter means;
control telemetry receiver means; and
video monitor means and
said camera end comprises:
camera telemetry transmitter means;
camera telemetry receiver means; and
camera means;

Control codes may be employed to vary the bi-directional data transmission characteristics.

Control codes may control the operating characteristics of the camera.

Each end of the system may be buffered.

A telemetry system in accordance with the present invention will now be described with reference to the accompanying drawings in which:-
- Figure 1: is a schematic illustration of prior art telemetry systems;
- Figure 2: shows pulse sequences utilised in prior art telemetry systems;
- Figure 3: shows bit coding;
- Figure 4: shows a line of data;
- Figure 5: shows the pulse sequence; and
- Figure 6: is a schematic illustration of a telemetry system.

The invention comprises a bi-directional telemetry system in which telemetry data is transmitted within a video picture transmission sequence via a single transmission medium. Embodiments of the present invention provide the following advantages over prior art methods:
(a) bi-directional data flow
(b) wider data band width/greater effective data rate
(c) cheap implementation
(d) provision of a transparent data path for "add-on" systems.

A preferred embodiment utilises coaxial cable as a transmission medium, but other suitable media, such as twisted pair, fibre optic or ordinary cable, or microwave and radio links, are within the scope of the invention.

The telemetry data is transmitted in the "field blanking" time when no picture information is sent. The embodiment described below is for use with the CCIR standard, and involves the transmission oftelemetry data after the frame synchronisation pulse and 5 line equalisation pulses. The transmission sequence may be adapted to conform to the EIA or any other standard.

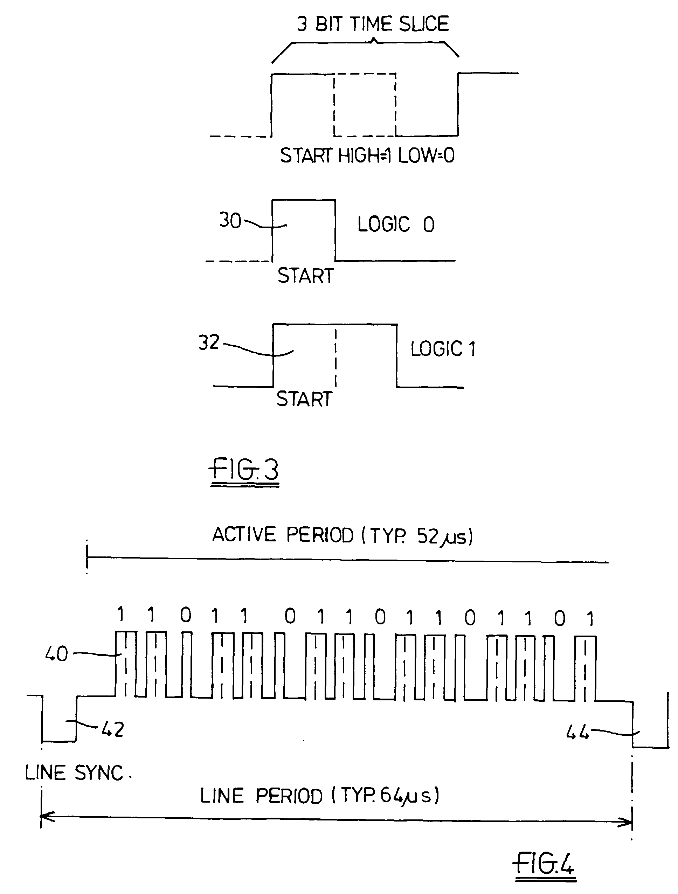

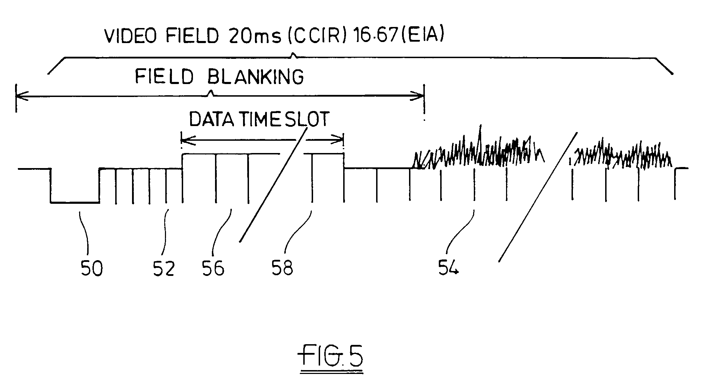

The basis of this new telemetry is a pulse width modulated three unit wide signal. Each unit is 1µs wide and therefore each transmitted data bit has a 3µs period. Figure 3 shows the bit coding employed, with pulse shape 30 representing 0 and pulse shape 32 representing 1. As shown in Figure 4, the 3µs data bit period permits 16 data bits 40 to be transmitted per line, each line being transmitted within consecutive line synchronisation pulses 42, 44.

Figure 5 shows the placement of data in the present embodiment. After the frame synchronisation pulse 50 and five line equalising pulses 52, there are at least ten available lines before video 54 is transmitted. To achieve bi-directional information flow, half of the available time slot is given to transmission of data and half to receiving data. The camera end receives the first five lines 56 and transmits on the next set of five lines 58, whilst conversely, of course, the control end transmits on the first set of five lines 56 and receives on the last set of five lines 58. Timing is provided inherently in the video standard employed.

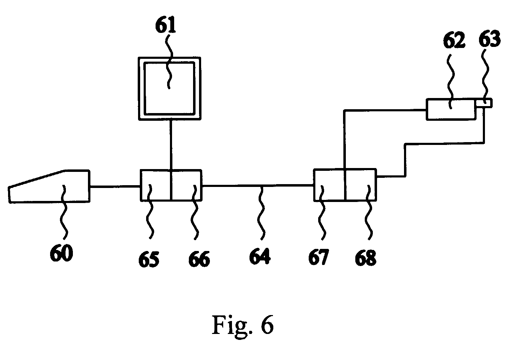

Figure 6 is an overview of a telemetry system which comprises control keyboard 60, video monitor 61, camera 62 with externally controllable lens 63, and coaxial cable 64 which components function in substantially similar manner to the prior art components described in Figure 1. The system further comprises control transmitter 65, control receiver 66, camera transmitter 67 and camera receiver 68. Directly after the frame synchronisation pulse and the five line equalisation pulses have been transmitted, the control transmitter 65 transmits five lines of data and then goes into high impedance mode for the next five lines. Line synchronisation is still transmitted in order to lock the control and camera ends together. The control receiver 66 now waits for data to be received over the next five lines. The camera receiver 68 counts the frame synchronisation pulse and the five line equalisation pulses and then listens during the next five lines for data being transmitted from the control transmitter 66. After the five transmitted lines of data the camera receiver 68 hands over to the camera transmitter 67 which transmits lines of data. Finally, the system is returned to the video.

In total some 8000 data bits can be transmitted each second, which may, but not necessarily, result in the transfer of 4000 data bits per second each way.

The use ofthe data can be enhanced by the use of standard error correction and encoding techniques.

There are many variations possible which would readily occur to one skilled in the art. For instance, the bi-directional data flow need not comprise five lines of data sent each way within a single set of synchronisation pulses. Instead, data may be transmitted in one direction on an odd field and in the other direction on the even field. Additionally, control codes may be provided so that, if required, a quantity of data may be sent unidirectionally, the system thereafter reverting to bi-directional data flow.Thus the control codes may alter the bi-directional data flow characteristics as a function of time.

Additionally, control ofthe video camera itself may be effected by control codes in the single transmission medium. For instance, at night it may be desirable to optimise the operating characteristics of the camera, and this may be achieved by downloading extra control information to the camera which, e.g. switches off the colour and enhances the total luminance from the camera.

Each end of the system should be buffered to allow for a transparent data throughput in the event that "add-on" systems are incorporated into the present invention.

## Claims

1. A bi-directional telemetry system in which telemetry data is transmitted within a video picture transmission sequence through a single transmission medium.

2. A system according to Claim 1 in which the telemetry data is transmitted through a coaxial cable.

3. A system according to Claim 1 in which the telemetry data is transmitted through a twisted pair cable.

4. A system according to Claim 1 in which the telemetry data is transmitted through a fibre optic cable.

5. A system according to Claim 1 in which the telemetry data is transmitted through an ordinary cable.

6. A system according to Claim 1 in which the telemetry data is transmitted through a microwave link.

7. A system according to Claim 1 in which the telemetry data is transmitted through a radio link.

8. A system according toany of the previous claims in which the telemetry data is sent in the field blanking time.

9. A system according to claim 8 in which the telemetry data is sent after the frame synchronisation pulse and a defined number of line equalisation pulses.

10. A system according to claim 9 in which the defined number of pulses is five.

11. A system according to any one of the previous claims in which each data bit is a three unit wide pulse width modulated signal.

12. A system according to claim 11 in which each data bit has a period of 3µs.

13. A system according to any of claims 10 to 12 in which data are transmitted as lines of data bits, and each line is transmitted between consecutive line equalisation or synchronisation pulses.

14. A system according to claim 13 in which sixteen data bits are transmitted per line.

15. A system according to any one of claims 10 to 14 in which ten lines of telemetry data are sent.

16. A system according to claim 15 in which the first five lines of data are sent to the camera and the second five lines of data are sent from the camera end.

17. A system according to any one of claims 10 to 14 in which data are sent in one direction during an odd field and in the other direction during the even field.

18. A system according to any one of the previous claims comprising a control end, a camera end and a coaxial cable linking said ends, in which the control end comprises:
control keyboard means;
control telemetry transmitter means;
control telemetry receiver means; and
video monitor means
and the camera end comprises;
camera telemetry transmitter means;
camera telemetry receiver means; and
camera means.

19. A system according to any one of the previous claims in which control locks are employed to vary the bi-directional data transmission characteristics.

20. A system according to any one of the previous claims in which both ends of the system are buffered.

21. A system according to any one of the previous claims in which both ends of the system are buffered.
